# EUROPEAN PATENT APPLICATION

(11) **EP 4 293 239 A1**
(43) Date of publication of application: **20.12.2023**
(21) Application number: 22179640.2
(22) Date of filing: 17.06.2022
(51) Int. Cl.: F16B 5/02, F16B 43/02

(54) **RESTRAINED WASHER ASSEMBLY COMPRISING TOP AND SEAT WASHER**

(71) Applicant: Growermetal S.p.A., 23885 Calco (LC) (IT)
(72) Inventor: CATTANEO, Paolo, 23885 Calco (LC) (IT)
(74) Representative: Kador & Partner Part mbB

(57) **Abstract**

The present invention relates to a washer assembly comprising, or consisting of, a top washer 1 and a seat washer 2 each comprising a central hole 3, 4, respectively, wherein top washer 1 has a lower part 5 which, seen from top to bottom, has a continuously decreasing outer diameter so that top washer 1 has a minimum width at its bottom 6, and seat washer 2 has an upper part 7 which, seen from top to bottom, comprises a top section with a continuously decreasing inner diameter so that upper art 7 of seat washer 2 has a minimum inner diameter at its top 8,
characterized in that
top washer 1 has an outwardly extending flange 9 adjoining the bottom 6 of top washer 1 and the lower part 10 of seat washer 2 has a recess 11 at its inner side, wherein the maximum outer diameter of flange 9 is bigger than the minimum inner diameter of the upper part 7 of seat washer 2 and wherein top and seat washers are assembled so that the outermost part of flange 9 of top washer 1 is present within recess 11 of seat washer 2.

## Description

The present invention relates to a washer assembly comprising a top and a seat washer.

Assemblies of spherical top washers and conical seat washers are known in the art and used in screw connections for clamping of two or more surfaces which are not lying parallel to one another or clamping of uneven surfaces to compensate for the deviation of the surface(s) from parallelism. For example, according to DIN 6319 the use of spherical washers together with conical seats permits bolts to be inclined up to 3° relative to the neutral axis of the assembly.

A problem of such assemblies is that two different washers are needed to form it, which means that in practice attention has to be paid by the user to position in the assembly the 2 washers correctly, to assemble the right washers and to not lose one of the washers when using the washer assembly for clamping, especially when using the assembly in places which are difficult to access for the user.

The present invention is based on the finding that these problems can be solved by providing an assembly of a top washer, usually having a spherical shape, and a seat washer in which the two washers are loosely connected to each other so that they cannot be separated from each other.

Accordingly, the present invention provides a washer assembly comprising, or consisting of, a top washer 1 and a seat washer 2 each comprising a central hole 3, 4, respectively, wherein top washer 1 has a lower part 5 which, seen from top to bottom, has a continuously decreasing outer diameter so that top washer 1 has a minimum width at its bottom 6, and seat washer 2 has an upper part 7 which, seen from top to bottom, comprises a top section with a continuously decreasing inner diameter so that upper part 7 of seat washer 2 has a maximum inner diameter at its top 8,
characterized in that
top washer 1 has an outwardly extending flange 9 adjoining the bottom 6 of top washer 1 and the lower part 10 of seat washer 2 has a recess 11 at its inner side, wherein the maximum outer diameter of flange 9 is bigger than the minimum inner diameter of the upper part 7 of seat washer 2 and wherein top and seat washers are assembled so that the outermost part of flange 9 of top washer 1 is present within recess 11 of seat washer 2.

The assembly of the invention ensures that the top and seat washer are assembled correctly and cannot get separated from each other so that the problems as outlined above are solved without negatively affecting the function of the top washer/seat washer couple to compensate for deviation from parallelism of surfaces to be clamped.

The terms "upper", "lower", "top" or "bottom" as used herein refer to a cross sectional view of the assembly of the invention with the seat washer at the bottom, as shown in the figures.

As each of the washers is rotationally symmetrical, the dimensional statements, such as with regard to diameters, given herein also refer to a cross-sectional view of the washer assembly.

Each of the washers has a central hole for receiving the shank of a screw. The inner circumference of the washer defines the outer circumference of the hole.

The width of the washer is defined to be the extension in radial direction from the inner circumference (or inner diameter) to the outer circumference (or outer diameter) of the washer.

The seat washer has an upper part which comprises, or consists of, the section of the washer with decreasing inner diameter and a lower part which comprises, or consists of, the recess.

The recess produces a section of the lower part 10 of seat washer 2 with an increased inner diameter compared to the inner diameter at the lower end 20 of upper part 7 of seat washer 2. The upper onset 20 of the recess defines the upper end of lower part 10 of seat washer 2 and, accordingly, corresponds to the lower end 20 of the upper part 7 of seat washer 2.

As usually and preferably the outer circumference of seat washer is constant along its entire thickness, the recess 11 reduces the width of the seat washer 2.

Usually and preferably, flange 9 is adjoining the bottom 6 of top washer 1 so that the inner diameter at the lowermost point of the bottom 6 of top washer 1 and the inner diameter at least of the part of the flange adjoining the bottom of top washer 2 are identical. In this manner, the flange inner side is in flush with the inner side of top washer 2.

Each of the washers has a central axis which is the straight line going through washer center perpendicular to the respective washer plane, which, in turn, is the plane defined by any circumference of the washer. The washer plane as mentioned hereinabove may also be seen as a tangential plane to a washer surface.

The top surface of the top washer and/or the top and bottom surface of the seat washer are usually in parallel to the respective washer plane.

The thickness of a washer or part of a washer is the extension of the washer in the direction perpendicular to the washer plane. For the thickness of the top washer the flange is not considered.

The top washer and the seat washer may be in a neutral position relative to each other which is defined to be the position where both central axes of the washers coincide.

Any position of the washers wherein their central axis do not coincide but are angled to each other is termed a tilted position.

The flange and the recess of the washer assembly of the invention are designed so that the assembly allows for a desired maximum inclination angle, i.e. the angle in maximal titled position of the washers, between the two central axes.

Usually, said the maximum inclination angle between the two central axes will be 5° or smaller, such as 4° or smaller, or such as 3° or smaller.

In use the two washers are engaged to each other with at least a part of the section of the top washer which decreases in outer diameter (and hence usually in width) and at least a part of the section of the seat washer which decreases in inner diameter (and hence usually increases in width) seen from top to bottom of the washer assembly.

Preferably and usually, the continuously decreasing outer diameter of lower part 5 of top washer 1 produces a spherical shape of lower part 5 of top washer 1. Such washers are also simply designated as "spherical washers".

Furthermore, also preferably and usually, the continuously decreasing inner diameter of upper part 7 of seat washer 2 produces a conical or spherical shape, preferably a conical shape, of upper part 7 of seat washer 2. Such washers are also simply designated as "spherical seat" or "conical seat", respectively.

Engaging a spherical top washer with a conical seat means that the contact area between the 2 washers is a circumference while engaging a spherical top washer with a spherical seat means that the contact area is a surface.

For example, spherical and conical washer assemblies are described in DIN 6319 to which it is referred. In particular it is referred to all dimensions and shapes of spherical and conical washers as disclosed in DIN 6319 for the different washer sizes defined by the thread size of the screw (Mx) for which the washer assembly is to be used with thread sizes as given in section 3.

The upper part of seat washer usually further comprises a bottom section adjacent to the section where the inner diameter of the washer is continually decreasing which has a constant inner diameter equal to the minimum diameter of the washer at the bottom of the section with continually decreasing inner diameter.

The flange adjoining the top washer bottom and the recess at the lower part of the seat washer are, of course, not defined in DIN 6319 so that the dimensions given therein apply as preferred embodiments for the dimensions of the top and seat washer of the invention not involving these parts.

The following preferred embodiments refer to the cross-sectional view of the washers.

The thickness t_{fl} of the flange is defined to be the extension of the flange in direction perpendicular to its axis of longest elongation. The axis of longest elongation may be curved or include curved sections.

The thickness t_{fl} of flange 9 is preferably from 0.3 to 3 mm, more preferably from 0.5 to 2.5 mm and/or is preferably from 1.5 to 5 % of the maximum outer diameter dout of top washer 1.

Preferably, the thickness of flange 9 is 0.23 < t_{fl}/(dₒᵤₜ/12)^{0.8} < 0.5, more preferably is 0.25 < t_{fl}/(dₒᵤₜ/12)^{0.8} < 0.47, still more preferably is 0.27 < t_{fl}/(dₒᵤₜ/12)^{0.8} < 0.45, and most preferably is 0.28 < t_{fl}/(dₒᵤₜ/12)^{0.8} < 0.42.

Preferably, the thickness of the flange decreases at least in part along the flange from bottom of the top washer 1 to the flange tip 19.

The total length of flange l_{fl} is defined to be the extension along its axis of longest extension from the point of adjoinment of the flange to the bottom of the top washer to the flange tip.

The total length of flange 9 is preferably from 1.0 to 10 mm and/or is preferably 5 to 20 %, more preferably 6 to 15 % of the maximum outer diameter of top washer 1.

Preferably, the total length of flange 9 l_{fl} is 1.2 < l_{fl}/(dₒᵤₜ/12)^{0.8} < 2.5, more preferably is 1.3 < l_{fl}/(dₒᵤₜ/12)^{0.8} < 2.0, and most preferably is 1.4 < l_{fl}/(dₒᵤₜ/12)^{0.8} < 1.9.

Preferably, flange 9 comprises, or consists of, a first leg 13 adjoining the bottom 6 of the top washer 1 and a second leg 14 adjoining the first leg 13, with both legs being angled to each other.

Preferably, the first leg 13 and/or second leg 14 has/have a straight shape along its/their longitudinal direction.

The angular section of flange 9 preferably is rounded.

Furthermore, preferably the first leg 13 of flange 9 has a smaller inclination with regard to the top washer central axis 12 than the second leg 14, and more preferably is parallel to the top washer central axis 12.

The second leg 14 of flange 9 preferably has an inclination with regard to top washer central axis 12 which is between 90 and 115°, preferably between 95 and 105°.

Preferably, the thickness of the first leg of the flange is bigger than the thickness of the second leg of the flange.

The thickness of first leg 13 of flange 9 is preferably from 0.4 to 3.0 mm, and/or preferably the thickness of second leg 14 of flange 9 is from 0.3 to 2.5 mm.

Preferably, the thickness of first leg 13 of flange 9 is from 2 to 5%, and/or the thickness of second leg 14 of flange 9 is from 1.5 to 4% of the maximum outer diameter of top washer 1.

Preferably, the thickness of first leg 13 of flange 9 is 0.25 < t_{fl1}/(dₒᵤₜ/12)^{0.8} < 0.5, more preferably is 0.28 < t_{fl1}/(dₒᵤₜ/12)^{0.8} < 0.47, and most preferably is 0.3 < t_{fl1}/(dₒᵤₜ/12)^{0.8} < 0.45.

Preferably, the thickness of second leg of flange 9 is 0.23 < t_{fl2}/(dₒᵤₜ/12)^{0.8} < 0.47, more preferably is 0.25 < t_{fl2}/(dₒᵤₜ/12)^{0.8} < 0.45, still more preferably is 0.27 < t_{f2l}/(dₒᵤₜ/12)^{0.8} < 0.42, and most preferably is 0.0.28 < t_{fl2}/(dₒᵤₜ/12)^{0.8} < 0.4.

The length of the legs of the flange are defined to be their longitudinal extension measured on the center line without the angular section connecting the legs.

The length of first leg 13 of flange 9 is preferably 0.40 to 6 mm and/or is preferably 4 to 10%, such as 6% of the outer diameter of top washer 1.

The length of second leg 14 of flange 9 is preferably 0.30 to 5.0 mm and/or is preferably 3 to 8%, such as 5 % of the outer diameter of top washer 1.

Preferably, the length of the first leg of flange 9 l_{fl1} is 0.5 < l_{fl}/(dₒᵤₜ/12)^{0.8} < 0.9, more preferably is 0.55 < l_{fl1}/(dₒᵤₜ/12)^{0.8} < 0.85, and most preferably is 0.6 < l_{fl1}/(dₒᵤₜ/12)^{0.8} < 0.8.

Preferably, the length of the second leg of flange 9 l_{fl2} is 0.45 < l_{fl2}/(dₒᵤₜ/12)^{0.8} < 0.9, more preferably is 0.50 < l_{fl2}/(dₒᵤₜ/12)^{0.8} < 0.8, and most preferably is 0.55 < l_{fl2}/(dₒᵤₜ/12)^{0.8} < 0.7.

Recess 11 is present at the inner side of the lower part 10 of seat washer 2 so that inner diameter of the lower part 10 of seat washer 2 is increased. The top onset of recess 11 defines the top of the lower part 10 of seat washer 2.

As usually the outer diameter of seat washer 2 is constant this means that the width of the washer is decreased where the recess is present.

Recess 11 may have different shapes. For example, in a first embodiment recess 11 may be shaped so that, seen from top to bottom, the inner diameter of seat washer is increased to a maximum value which may be constant, or is even further increased so that seat washer 2 has a maximum inner diameter at its bottom. Optionally, at the top onset of the recess a section is present where the inner diameter is continually increased to a constant value.

Accordingly, the recess is present from its onset to the bottom of the seat washer. This shape of the recess 11 in this first embodiment may be designated e.g. as a cut-out.

In a second embodiment, recess 11 may be shaped so that, seen from top to bottom, after a section where the inner diameter of seat washer 2 is increased to a maximum value, which may be constant, the inner diameter is decreased again so that the inner diameter of the seat washer at the very bottom is smaller than at the part where the recess is present, which means that in the usual case where the seat washer has a constant outer diameter that the width of the washer is increased again and is greater at its bottom section than at the section where the recess is present.

Optionally, at the top of the recess a section is present where the inner diameter is continually increased to the maximum value, which may be constant, and/or optionally at the bottom of the recess a section is present where the inner diameter is continually decreased.

This shape of the recess 11 in this second embodiment may be designated e.g. as an indent.

The inner diameter of the bottom section of the lower part of the seat washer may be constant.

Preferably, the extension of the bottom section in thickness direction of the seat washer, i.e. in a direction in parallel to its axis, is from 1 to 10 mm/ is from 40 to 60 % of the total thickness of the washer.

Seat washers having a recess according to this second embodiment are especially suitable for washer assemblies in which the seat washer has a comparably low maximum width, for example, because the seat washer has the same outer diameter as the top washer, so as to provide a lower surface of the seat washer which gives sufficient contact to engage with the work piece to be clamped.

In this second embodiment of the recess, preferably the maximum outward diameter of the flange 9 is smaller than the inner diameter of said bottom section of the seat washer.

Where not mentioned otherwise or not clear from the context the following preferred embodiments of the recess shape and geometry apply to both embodiments as described above.

The extension of the recess in width direction of the seat washer is preferably at least, or exactly, so that in maximum tilted position of the washer assembly the outer tip of the flange at one side rests against the pieces of the seat washer defining the recess.

Preferably, the extension of the recess in width direction wᵣ of the seat washer, i.e. in a direction perpendicular to the washer axis, is from 0.70 to 5 mm, and/or from 25 to 35 % of the maximum seat washer width w_{seat,max}.

Preferably, the extension of the recess in thickness direction of the seat washer, i.e. in a direction parallel to the washer axis, is from 0.60 to 7 mm, or from 20 to 40 % of the total seat washer thickness.

The extension of the recess in thickness direction of the seat washer is preferably at least, or exactly, so that in maximum tilted position of the washer assembly the outer tip of the flange at one side rests against the pieces of the seat washer defining the recess.

Preferably, recess 11 of seat washer 2 has an angular shape and further preferred the recess, in cross-sectional view, comprises, or consists of, two straight parts 16,17 angled to each other.

Further preferred, the first part 16 of recess 11 adjacent to upper part 7 of seat washer 2 has an inclination with regard to the central axis 15 of seat washer 2 which is bigger than the inclination of the second part 17 of recess 11.

The inclination of first part 16 of recess 11 adjacent to upper part 7 of seat washer 2 with regard to seat washer central axis 15 preferably is between 90 to 110°, more preferably between 95 to 105°, and/or the inclination of second part 17 of recess 11 of seat washer 2 with regard to seat washer central axis 15 is from preferably from 0 to 10 °, more preferably from 0 to 5°.

Preferably, the inclination of the second leg 14 of flange 9 with regard to top washer central axis 12 and the inclination of first part 16 of recess 11 adjacent to upper part 7 of seat washer 2 with regard to seat washer central axis 15 differ from each other by at most 5°, more preferably differ from each other by at most 3 ° and most preferably are the same.

In the second embodiment of the recess, in addition it is preferred that a third part 21 adjacent to the second part 17 of the recess is present and/or a bottom section 22 adjacent to the third part 21 of recess 11 (all seen from top to bottom) is present.

Preferably, the third part 21 of recess 11 has an inclination with regard to the central axis 15 of seat washer 2 which is bigger than the inclination of the second part 17 of recess 11.

The inclination of third part 21 of recess 11 with regard to seat washer central axis 15 preferably is between 70 to 90°, more preferably between 75 to 85°,

Preferably, the inclination of bottom section 22 of the lower part 10 of seat washer 2 with regard to seat washer central axis 15 is from preferably from 0 to 10°, more preferably from 0 to 5°.

The thickness of the bottom section 22 t_{b} is preferably from 0.5 to 7 mm and/or from 25 to 35 % of the maximum washer thickness tmax.

In all embodiments of the recess, upper part 7 of seat washer 2 preferably comprises a lower section 18 between the section of upper part 7 of seat washer 2 which has a continuously decreasing inner diameter and recess 11, wherein lower section 18 has the minimum inner diameter of seat washer 2.

Preferably, the thickness of lower section 18 is smaller than the length of first leg 13 of flange 9.

The maximum outward extension of flange 9 is preferably at most so that in maximum tilted position of top washer 1 and seat washer 2 the tip 19 of flange 9 is resting against the inner diameter of recess 11.

Preferably, the distance from inner diameter of seat washer 2 to tip 19 of flange 9 in the neutral position of both washers is from 0.50 to 5.0 mm.

Preferably, distance from inner diameter of seat washer 2 to tip 19 of flange 9 in the neutral position of both washers dᵢₜ is 0.4 < dᵢₜ/(dₒᵤₜ/12)^{0.85} < 0.8, more preferably is 0.45 < dᵢₜ/(dₒᵤₜ/12)^{0.85} < 0.75, and more preferably is 0.5 < dᵢₜ/(dₒᵤₜ/12)^{0.85} < 0.7, wherein dout is the maximum outer diameter of top washer 1, also denoted as maximum width of the top washer.

Tip 19 of flange 9 preferably has a rounded shape.

Preferably, central hole 3 of top washer 1 has a cylindrical shape from top to bottom.

Preferably, the minimum lower surface width of seat washer is 1.2 mm/%, and/or is at least 80% of the maximum width of the seat washer.

The outer circumference of the top side of top washer 1 and/or the outer circumference at the bottom of seat washer 2 preferably comprises a beveled portion, i.e. are chamfered.

Preferably, the beveled portion makes up at most 10 % of the maximum width of the washer, preferably at most 5 % of the maximum width of the washer.

The chamfer(s) preferably has(have) a planar surface.

Furthermore, the beveled section forms an angle with the washer surface of from 20 to 70°, more preferably from 30 to 60°, and most preferably of from 35 to 49 °, such as e.g. 45°.

As a material for the washers it is preferred that materials and a hardness of these materials as disclosed in DIN 6319 items 4 and 5 are used.

For example, for top washers of type C (as designated in DIN 6319) and/or seat washers of type D carbon steel, case hardened at a depth of 0.2 - 0.4 mm with a surface hardness of 550-650 Hv 10 may be used.

For seat washers of type G carbon steel (as designated in DIN 6319), quenched and tempered with a hardness of 350-430 Hv 30 may be used.

Top and seat washer can also be both built using a suitable carbon steel material (i.e. C60 or 42CrMo4) and heat treated quenched and tempered with core and surface hardness from 300 to 550 Hv, more preferably from 350 to 550 Hv 10 and most preferably from 450 to 550 Hv 10.

All Vickers ("Hv") hardnesses mentioned herein are measured according to ISO 6507-1, year 2000 edition.

To the washer, different surface treatments may be applied, such as, e.g., burnishing with light oil film protection, phosphating, mechanical zinc, electroplating, zinc-nickel or zinc-flake coatings.

The invention is further illustrated by reference to the following examples be reference to the figures, wherein:
Fig. 1A shows a washer assembly according to the invention in a first embodiment in size M16 in cross-sectional view in neutral position.
Fig. 1B shows a washer assembly according to the invention in a first embodiment in size M16 in cross-sectional view in maximum tilted position.
Fig. 2A shows a washer assembly according to the invention in a first embodiment in size M6 in cross-sectional view in neutral position.
Fig. 2B shows a washer assembly according to the invention in a first embodiment in size M6 in cross-sectional view in maximum tilted position.
Fig. 3A shows a washer assembly according to the invention in a first embodiment in size M48 in cross-sectional view in neutral position.
Fig. 3B shows a washer assembly according to the invention in a first embodiment in size M48 in cross-sectional view in maximum tilted position.
Fig. 4A shows a washer assembly according to the invention in a second embodiment in size M16 in cross-sectional view in neutral position.
Fig. 4B shows a washer assembly according to the invention in a second embodiment in size M16 in cross-sectional view in maximum tilted position.
Fig. 5A shows a washer assembly according to the invention in a second embodiment in size M6 in cross-sectional view in neutral position.
Fig. 5B shows a washer assembly according to the invention in a second embodiment in size M6 in cross-sectional view in maximum tilted position.
Fig. 6A shows a washer assembly according to the invention in a second embodiment in size M48 in cross-sectional view in neutral position.
Fig. 6B shows a washer assembly according to the invention in a second embodiment in size M48 in cross-sectional view in maximum tilted position.

In the figures, the reference numbers denote:
- 1:: top washer
- 2:: seat washer
- 3:: central hole of top washer 1
- 4:: central hole of seat washer 2
- 5:: lower part of top washer 1
- 6:: bottom of top washer 1
- 7:: upper part of seat washer 2
- 8:: top of seat washer 2
- 9:: flange
- 10:: lower part of seat washer 2
- 11:: recess
- 12:: central axis of top washer 1
- 13:: first leg of flange 9
- 14:: second leg of flange 9
- 15:: central axis of seat washer 2
- 16:: first part of recess 11 adjacent to upper part 7 of seat washer 2
- 17:: second part of recess 11 adjacent to first part
- 18:: lower section of upper part 7 of seat washer 2
- 19:: tip of flange
- 20:: onset of recess
- 21:: third part of recess adjacent to second part
- 22:: bottom section of lower part 10 of seat washer 2.

### Examples

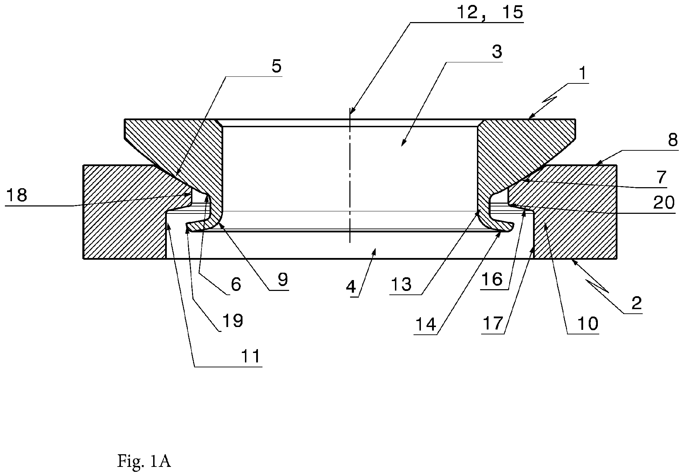

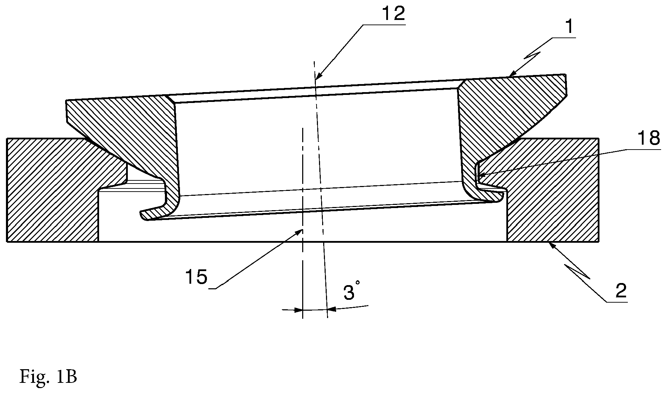

A first example of the washer assembly of the invention in size M16 is shown in Figures 1A and 1B which are true-to-scale drawings.

The assembly consists of a spherical top washer 1 and a conical seat washer 2 each comprising a central hole 3, 4, respectively, top washer 1 has an outwardly oriented flange 9 adjoining the bottom 6 of top washer 1 and the lower part 10 of seat washer 2 has a recess 11 at its inner side. The maximum outer diameter of top washer is 30.20 mm, and the minimum inner diameter is 17.00 mm. The maximum outer diameter of seat washer 2 is 36 mm and its minimum inner diameter is 21.00 mm.

Flange 9 consists of two angled legs, with the first leg 13 adjoining the bottom 6 of the top washer 1 and the second leg 14 adjoining the first leg 13. The first leg 13 is parallel to the top washer central axis 12 and the second leg has an inclination angle of 100° with top washer central axis 12, so that the angle between first and second leg of flange 9 is 100°. The angular section connecting the first and second leg is rounded. The tip 19 ends the second leg 14 and is also rounded. The maximum outward extension as defined by its maximum outward diameter from tip to tip 19 of flange 9 is 21.8 mm.

The total length of flange 9 is 3.5 mm. The thickness of first leg 13 of flange 9 is 0.75 mm and the thickness of second leg 14 of flange 9 is 0.63 mm.

The length of first leg 13 of flange 9 is 1.4 mm and the length of second leg 14 of flange 9 is 1.25 mm.

Recess 11 has an angular shape and consists of a first part 16 of recess 11 adjacent to upper part 7 of seat washer 2, which defines the onset 20 of the recess, and a second part 17. The first part 16 has an inclination with regard to the central axis 15 of seat washer 2 which is 100° and the inclination of second part 17 of recess 11 of seat washer 2 with regard to seat washer central axis 15 is 0°.

The maximum extension of the recess in width direction of the seat washer, i.e. in a direction perpendicular to the washer axis, as defined by the second part 17 of the recess, is 1.70 mm.

The maximum extension of the recess in thickness direction of the seat washer, i.e. in a direction parallel to the washer axis, as defined by the first 16 and second part 17, is 3.50 mm.

The lower section 18 of upper part 7 of seat washer 2 has a thickness, i.e. a length in direction parallel to the washer central axis, of 1 mm.

The central hole 3 of top washer 1 has a cylindrical shape with a nominal diameter of 17 mm.

The outer circumference of the top side of top washer 1 and the outer circumference at the bottom of seat washer 2 are preferably chamfered.

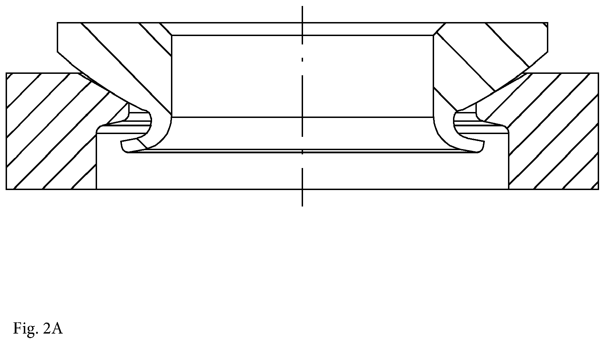

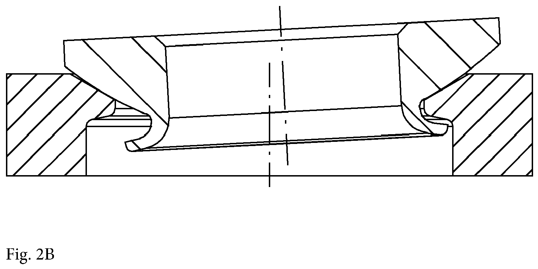

Figures 2A and 2B show true-to-scale drawings of a washer assembly in a first embodiment in size M6 with the outer maximum diameter of the top washer being 12 mm.

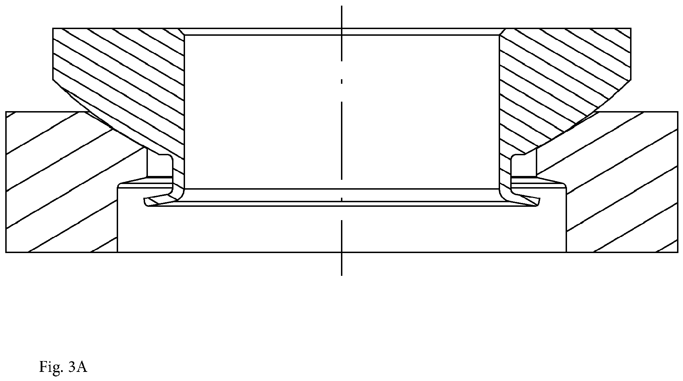

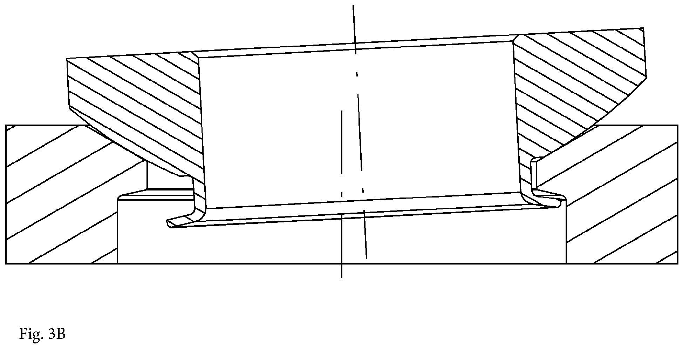

Figures 3A and 3B show true-to-scale with the outer maximum diameter of the top washer being 92 mm.

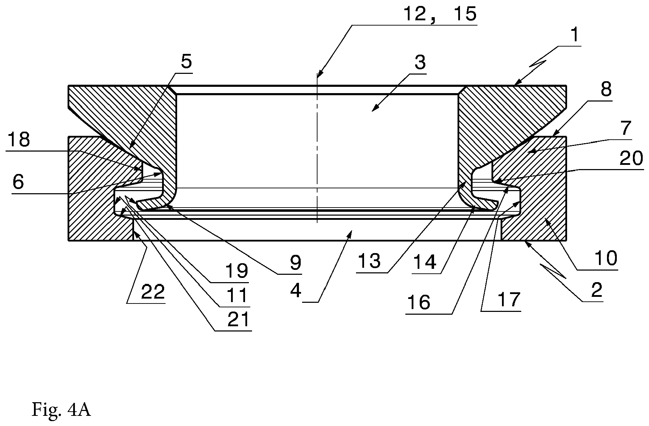

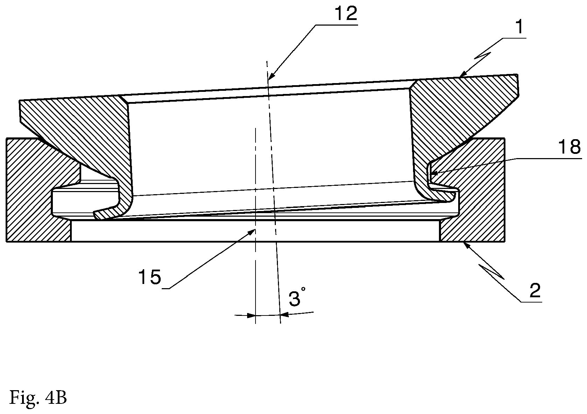

A second example of the washer assembly of the invention in size M16 is shown in Figures 4A and 4B which are true-to-scale drawings. The assembly consists of a spherical top washer 1 and a conical seat washer 2 each comprising a central hole 3, 4, respectively, top washer 1 has an outwardly oriented flange 9 adjoining the bottom 6 of top washer 1 and the lower part 10 of seat washer 2 has a recess 11 at its inner side. The maximum outer diameter of top washer is 30.20 mm, and the minimum inner diameter is 17.00 mm. The maximum outer diameter of seat washer 2 is 30.20 mm and its minimum inner diameter is 21.00 mm.

Flange 9 consists of two angled legs, with the first leg 13 adjoining the bottom 6 of the top washer 1 and the second leg 14 adjoining the first leg 13. The first leg 13 is parallel to the top washer central axis 12 and the second leg has an inclination angle of 100° with top washer central axis 12, so that the angle between first and second leg of flange 9 is 100°. The angular section connecting the first and second leg is rounded. The tip 19 ends the second leg 14 and is also rounded. The maximum outward extension as defined by its maximum outward diameter from tip to tip 19 of flange 9 is 21.8 mm.

The total length of flange 9 is 3.5 mm, the thickness of first leg 13 of flange 9 is 0.75 mm and the thickness of second leg 14 of flange 9 is 0.63 mm.

The length of first leg 13 of flange 9 is 1.4 mm and the length of second leg 14 of flange 9 is 1.25 mm.

Recess 11 has an angular shape and consists of a first part 16 of recess 11 adjacent to upper part 7 of seat washer 2, which defines the onset 20 of the recess, a second part 17, and a third part 21 adjacent to the second part 17.

Furthermore, a bottom section 22 adjacent the third part 21 of recess 11 is present.

The third part 21 has an inclination with regard to the central axis 15 of seat washer 2 which is 80°.

The inclination of the bottom section 22 of the lower part 10 of seat washer 2 with regard to seat washer central axis 15 is 0°.

The extension of the recess in width direction of the seat washer, i.e. in a direction perpendicular to the washer axis, as defined by the second part 17 of the recess is 1.60 mm.

The extension of the recess in thickness direction of the seat washer, i.e. in a direction parallel to the washer axis, as defined by the first part 16, second part 17, and third part 21 is 2.20 mm.

The upper section 18 of the lower part 10 of seat washer 2 has a thickness, i.e. a length in direction parallel to the washer central axis, of 1 mm.

The thickness of the bottom section 22 of the lower part 10 of seat washer 2 is 1.30 mm, and the width of the washer at bottom section 22 is 3.90 mm.

The central hole 3 of top washer 1 has a cylindrical shape with a nominal diameter of 17 mm.

The outer circumference of the top side of top washer 1 and the outer circumference at the bottom of seat washer 2 are preferably chamfered.

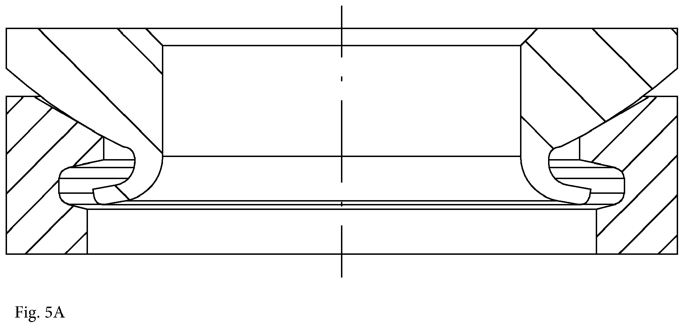

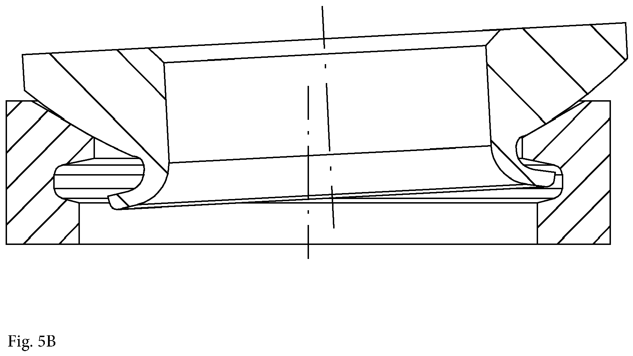

Figures 5A and 5B show true-to-scale drawings of a washer assembly in a second embodiment in size M6 with the outer maximum diameter of the top washer being 12 mm.

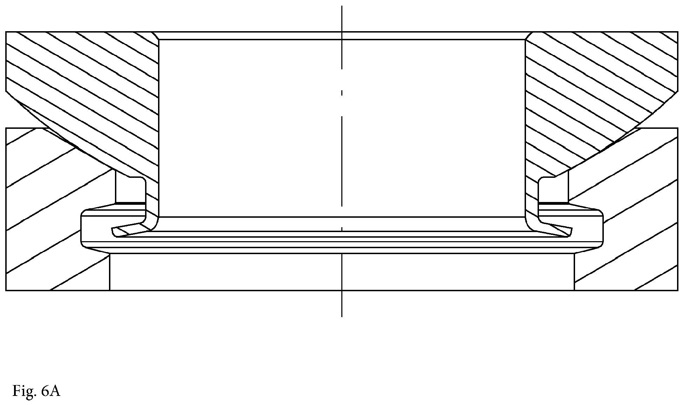

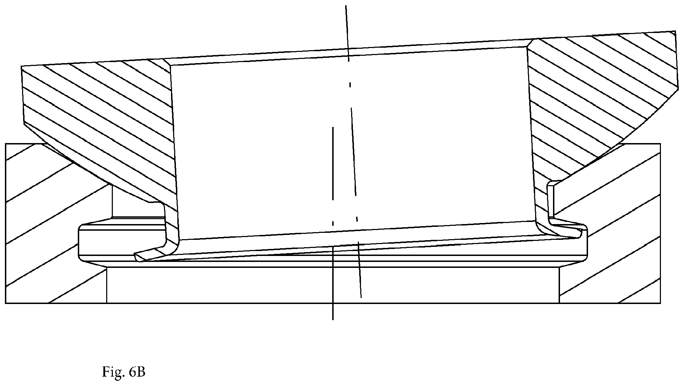

Figures 6A and 6B show true-to-scale drawings of a washer assembly in a second embodiment in size M48 with the outer maximum diameter of the top washer being 92 mm.

## Claims

1. A washer assembly comprising, or consisting of, a top washer 1 and a seat washer 2 each comprising a central hole 3, 4, respectively, wherein top washer 1 has a lower part 5 which, seen from top to bottom, has a continuously decreasing outer diameter so that top washer 1 has a minimum width at its bottom 6, and seat washer 2 has an upper part 7 which, seen from top to bottom, comprises a top section with a continuously decreasing inner diameter so that upper part 7 of seat washer 2 has a maximum inner diameter at its top 8,
**characterized in that**
top washer 1 has an outwardly extending flange 9 adjoining the bottom 6 of top washer 1 and the lower part 10 of seat washer 2 has a recess 11 at its inner side, wherein the maximum outer diameter of flange 9 is bigger than the minimum inner diameter of the upper part 7 of seat washer 2 and wherein top and seat washers are assembled so that the outermost part of flange 9 of top washer 1 is present within recess 11 of seat washer 2.

2. Washer assembly according to claim 1 wherein the continuously decreasing outer diameter of lower part 5 of top washer 1 produces a spherical shape of lower part 5 of top washer 1.

3. Washer assembly according to claim 1 or 2 wherein the continuously decreasing inner diameter of the top section of upper part 7 of seat washer 2 produces a conical or spherical shape, preferably a conical shape, of the top section of upper part 7 of seat washer 2.

4. Washer assembly according to any one of the preceding claims wherein the thickness t_{fl} of flange 9 is preferably from 0.3 to 3 mm, more preferably from 0.5 to 2.5 mm and/or is preferably from 1.5 to 5 % of the maximum outer diameter dₒᵤₜ of top washer 1.

5. Washer assembly according to any one of the preceding claims wherein the total length of flange 9 is preferably from 1.0 to 10 mm and/or is preferably 5 to 20 %, more preferably 6 to 15 % of the maximum outer diameter of top washer 1.

6. Washer assembly according to any one of the preceding claims wherein flange 9 comprises a first leg 13 adjoining the bottom 6 of the top washer 1 and a second leg 14 adjoining the first leg 13, with both legs being angled to each other.

7. Washer assembly according to claim 6 wherein the first leg 13 of flange 9 has a smaller inclination with regard to the top washer central axis 12 than the second leg 14, preferably is parallel to the top washer central axis 12.

8. Washer assembly according to claim 6 or 7 wherein second leg 14 of flange 9 has an inclination with regard to top washer central axis 12 which is between 90 and 115°, preferably between 95 and 105°.

9. Washer assembly according to any one of the preceding claims wherein recess 11 of seat washer 2 has a cut-out or an indent shape.

10. Washer assembly according to any one of the preceding claims wherein recess 11 of seat washer 2 has an angular shape.

11. Washer assembly according to claim 10 wherein a first part 16 of recess 11 adjacent to upper part 7 of seat washer 2 has an inclination with regard to the central axis 15 of seat washer 2 which is bigger than the inclination of a second part 17 of recess 11.

12. Washer assembly according to claim 10 or 11 wherein the inclination of first part 16 of recess 11 adjacent to upper part 7 of seat washer 2 with regard to seat washer central axis 15 is from 90 to 110°, preferably from 95 to 105°, and/or the inclination of second part 17 of recess 11 of seat washer 2 with regard to seat washer central axis 15 is from 0 to 10 °, preferably from 0 to 5°.

13. Washer assembly according to any one of the preceding claims wherein upper part 7 of seat washer 2 comprises a lower section 18 between the section of upper part 7 of seat washer 2 which has a continuously decreasing inner diameter and recess 11, wherein lower section 18 has the minimum inner diameter of seat washer 2.

14. Washer assembly according to claim 13 wherein the thickness of lower section 18 is smaller than the length of first leg 13 of flange 9.

15. Washer assembly according to any one of the preceding claims wherein the maximum outward extension of flange 9 is at most so that in maximum tilted position of top washer 1 and seat washer 2 the tip 19 of flange 9 is resting against the inner diameter of recess 11.
